# EUROPEAN PATENT APPLICATION

(11) **EP 2 216 765 A1**
(43) Date of publication of application: **11.08.2010**
(21) Application number: 09007937.7
(22) Date of filing: 17.06.2009
(51) Int. Cl.: G09B 9/06

(54) **Simulation apparatus for sailing boat**

(30) Priority: 05.02.2009 IT MI20090146
(71) Applicant: Ausenda, Giovanni, 20080 Vernate (MI) (IT); ETS Elettronica S.r.L., 20086 Motta Visconti (MI) (IT)
(72) Inventor: Ausenda, Giovanni, 20080 Vernate (Milano) (IT)
(74) Representative: Lunati & Mazzoni S.r.L.

(57) **Abstract**

There is described a simulation apparatus (1) for sailing boat (30) comprising: a fixed structure (7) suitable to support the simulation apparatus (1) on the ground, a support device (3) suitable to support the sailing boat (30) and positioned on said fixed structure (7), said support device (3) being suitable to oscillate angularly about a longitudinal axis (3a), along a guide (4) and in opposition to opposing means (5).

## Description

The present invention relates to a simulation apparatus in particular for sailing boats of the type specified in the preamble of Claim 1.

Some types of simulation apparatus for sailing boats are currently known.

In fact, these are used in seasons and in places in which it is difficult to use real sailing boats in water, i.e. on the sea or on lakes.

Said simulation apparatus are mainly realized by virtual systems.

Therefore, they comprise screens, controls and moving platforms which simulate the reactions and behaviour of a sailing boat in water.

Said virtual simulation apparatus have some important drawbacks.

In fact, as it is known, virtual devices cannot provide the user with the same sensations as a real device.

In fact, no matter how sophisticated the software is, it has approximations and estimations which do not correspond to the situations and reactions of a real boat.

Moreover, the sensations of users are lessened and altered by the awareness that they are using a virtual system.

Consequently, virtual simulation apparatus are not entirely suitable to teach a beginner or to train an amateur.

Finally, virtual devices are very costly and complex.

Some mechanical devices have also been produced which make use of the force of the wind and of some elastic elements suitable to partially simulate the behaviour of a sailing boat in water.

The latter partially solve some of the aforesaid drawbacks, but are too approximate and basic to optimally simulate a sailing situation on the sea or on a lake.

In this situation the technical aim underlying the present invention is to devise a simulation apparatus for sailing boats capable of substantially overcoming the aforesaid drawbacks.

Within this technical aim, an important object of the invention is to obtain a simulation apparatus for sailing boats which simulates the reactions and behaviour of a sailing boat in water and which gives the user sensations and impressions similar to those obtained on a sailing boat in water.

Another important object of the invention is to produce a simple and inexpensive simulation apparatus for sailing boats.

The technical aim and objects specified are achieved by a simulation apparatus for sailing boats according to the appended Claim 1.

Preferred embodiments are highlighted in the dependent claims.

The characteristics and advantages of the invention are better specified below by the detailed description of a preferred embodiment of the invention, with reference to the accompanying drawings, wherein:
**Fig. 1** shows a simulation apparatus in an axonometric overall view;
**Fig. 2** shows a top view of the simulation apparatus;
**Fig. 3a** shows a top view of the simulation apparatus in a first condition; and
**Fig. 3b** shows a top view of the simulation apparatus in a second condition.

With reference to the figures cited, the simulation apparatus 1 according to the invention is indicated as a whole with the reference number 1.

It can be associated with a sailing boat **30,** if necessary after some modifications thereto, as better specified below.

The simulation apparatus 1 comprises, briefly, a fixed base structure **7,** a platform **2,** at least partly freely revolving about a substantially vertical axis **2a,** a support device **3** positioned on the platform 2, oscillatable and suitable to support the sailing boat 30.

In more detail, the fixed structure 7 supports the platform 2 and the entire device 1.

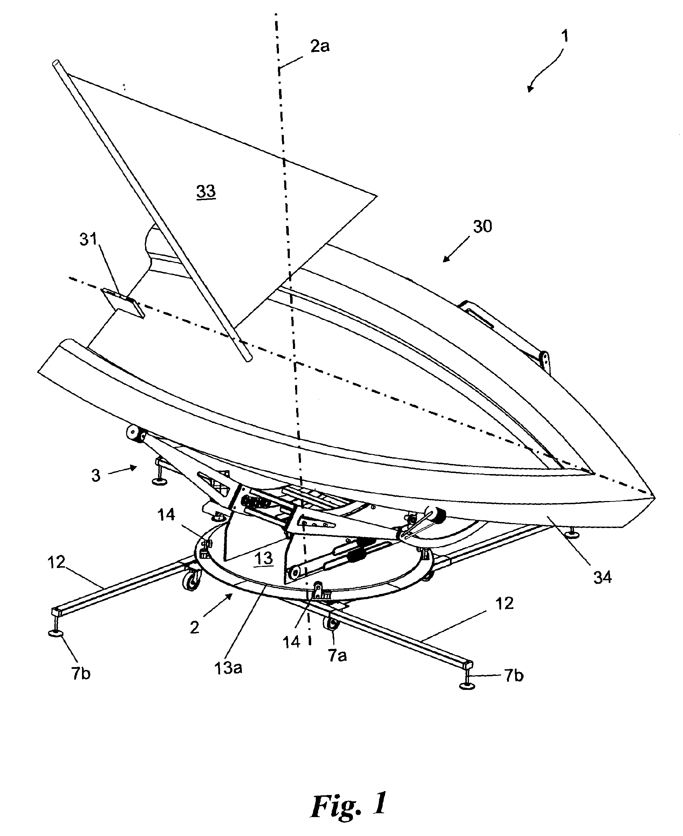

It can be positioned on the ground and if necessary provided with wheels **7a,** suitable for transport, and with fixed and adjustable supports **7b** suitable to constrain it to the ground (Fig. 1).

The fixed structure 7 also comprises four telescoping support arms **12,** of appropriate length and suitable to prevent overturning of the apparatus 1 including the boat 30.

The platform 2 is then supported by the fixed structure 7 and is suitable to rotate with reference thereto along the vertical axis **2a.**

The platform 2 preferably comprises a base **13** including a circular guide **13a,** or disk, circle-shaped with centre positioned in the direction of the axis 2a.

The base 13 is supported by rotatable elements **14,** or ball bearings, in turn constrained to the fixed structure 7, and positioned in tangential directions with respect to said circular guide **13a.** The rotatable elements 14 are therefore suitable to constrain the movement of the base 13 in the radial direction and to allow movement thereof in the tangential direction.

Consequently, the base 13 can move in the direction of rotation about the vertical axis **2a** and, concordantly with this platform 2, it can rotate freely, if subjected to external forces such as that of the wind, about the vertical axis 2a.

The platform 2 also preferably comprises a first motor **6** suitable to produce this rotation about the vertical axis 2a when activated by a user.

The first motor 6 is preferably hydraulic and comprises a movable toothed wheel **15,** or a chain pinion, connected to a fixed toothed wheel **16,** connected to the fixed structure 7 and with centre positioned along the vertical axis 2a.

This first motor 6 is then functionally connected to a rudder **31,** preferably electrically or hydraulically by means of open centre valves and a valve actuator with proportional flow and if necessary to an electronic and/or mechanical actuator. The first motor 6 and rudder 31 are therefore suitable to simulate the behaviour of a boat following controls given by movement of the rudder 31 through ropes connected from the rudder 31 to a hydraulic and/or electronic joystick.

The first motor 6 is also suitable to allow free movements, or at least partially free, as they are subjected to the frictions and to the force of this first motor 6. Therefore, it is preferably realized by a hydraulic motor, which allows the toothed wheels 15 and 16 to move freely without acting thereon, when stressed only by external forces. This free movement takes place as a result of the adjustable discharge of the hydraulic circuit at the outlet or the motor, which also acts as hydraulic clutch simulating the hydrodynamic force of the water on the keel and slowing the rotation considerably.

The support device 3 is constrained to the platform 2 and therefore revolves about the axis 2a together with the platform.

It can also oscillate angularly about a longitudinal axis **3a,** preferably positioned in the horizontal plane and coincident, during use, with the longitudinal axis of the boat 30.

Said oscillations take place along a guide **4** and in opposition to opposing means **5.**

The support device 3 is suitable to support the boat 30 and therefore has a support structure approximately in the shape of a sector of a cylinder and comprising blocking or bearing elements **17** and specific shoulders to support the boat 30.

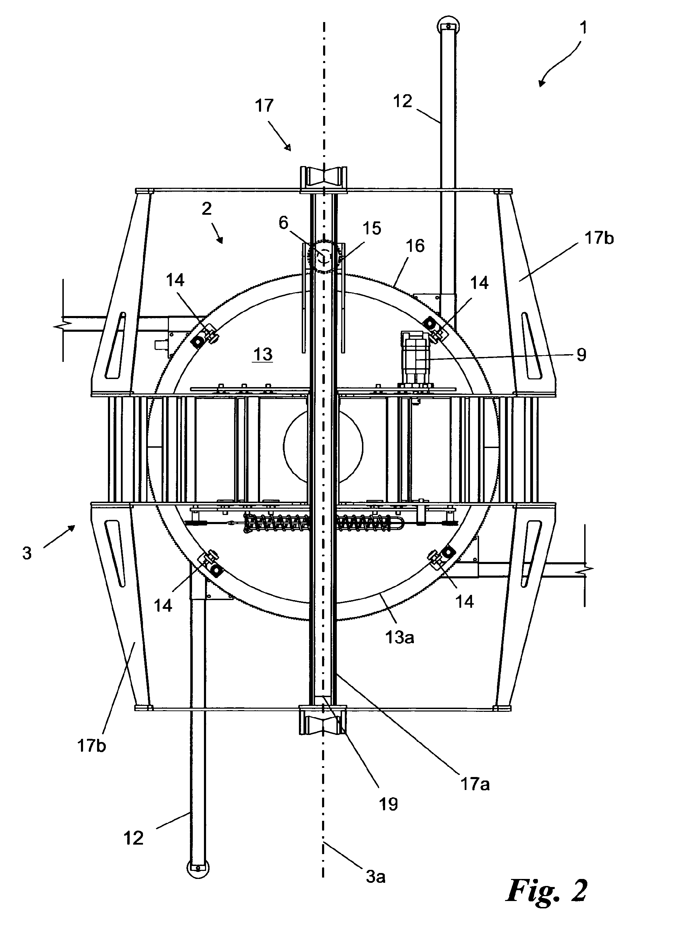

The latter comprise a longitudinal seat **17a,** with specific supports, suitable to be placed in contact with the central and lower axis **32** of the hull **34** (Fig. 2), and lateral elements **17b,** suitable to be positioned in contact with portions of lateral body of the boat 30, as shown in Fig. 1.

The longitudinal seat 17a is preferably vertically aligned with the longitudinal axis 3a of the support device 3.

The lateral elements 17b are also available in positions adjustable according to the dimensions of the boat 30.

The support device 3 is movable along at least one guide 4 preferably in the shape of an arc of circumference, positioned on a vertical plane and with centre along the longitudinal axis 3a.

In particular, the guide 4 defines an arc of circumference of between 10° and 80° according to the characteristics required.

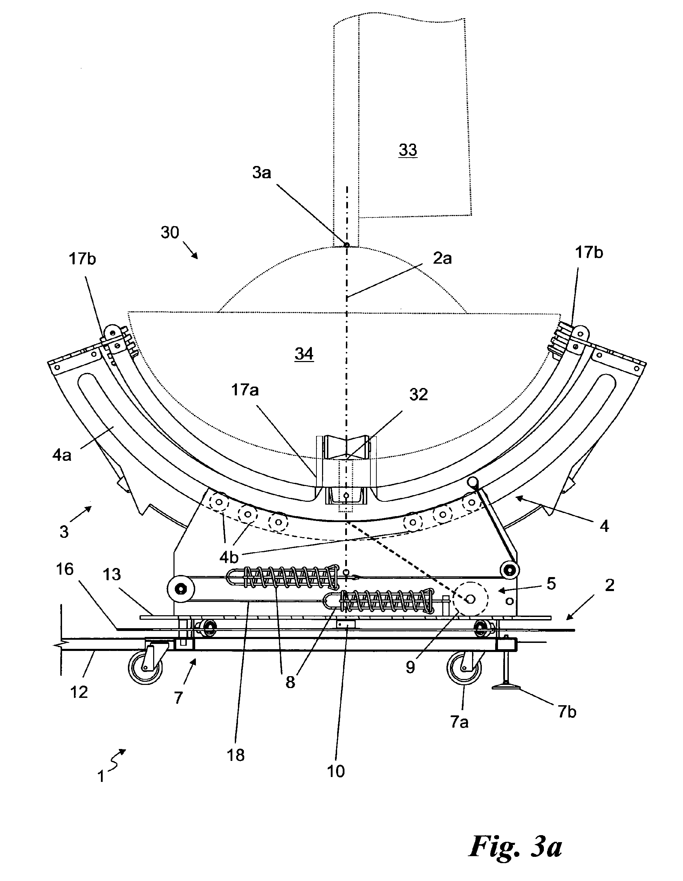

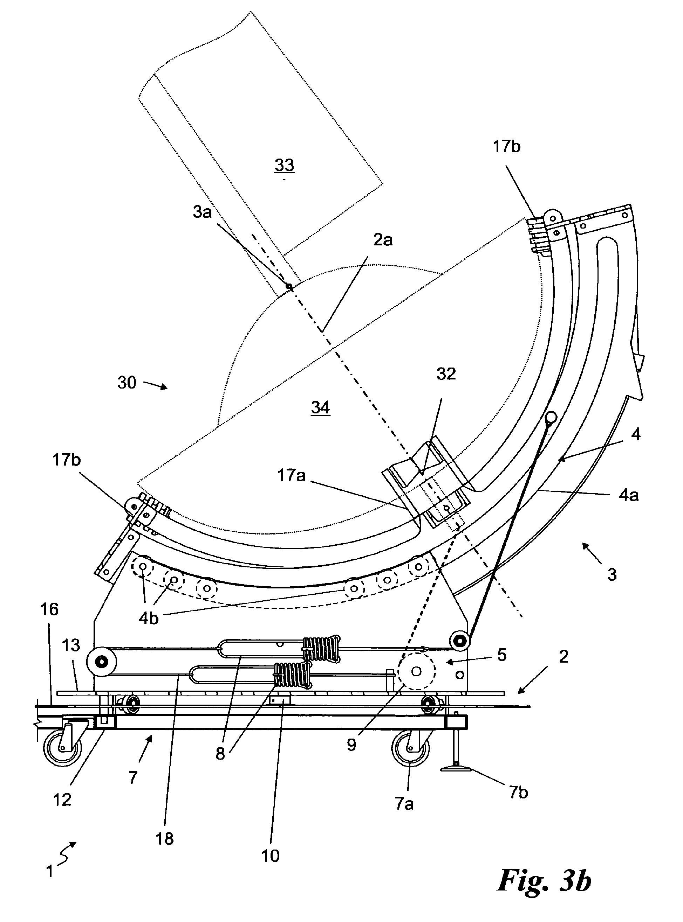

The guide 4 is preferably realized by a track **4a** integral with the support device 3 and constrained to a plurality of wheels **4b,** or bearings, integral with the platform 2. The wheels 4b are therefore preferably suitable to run inside the track 4a, as shown in Figs. 3a and 3b.

The movement along the guide 4 takes place in opposition to opposing means 5.

The latter preferably comprise elastic elements **8** realized by steel compression springs equipped with tie rods on both sides.

The elastic elements 8 are connected, through a rope **18,** both to the platform 2 and to the support device 3, so that the position of equilibrium of the support device 3 is symmetrical with respect to the vertical axis 2a (Fig. 3a) and so that each movement thereof along the guide 4 corresponds to a lengthening of the rope 18 and to a consequent contraction of the elastic elements 8 (Fig. 3b).

Moreover, two ropes 18 can be provided, each equipped with its own opposing means 5 or simply with its own elastic means 8 and fastened to two symmetrical points of the support device 3.

Moreover, the opposing means 5 preferably also comprise, in particular if intended for heavy boats, a second motor **9,** suitable to be activated in particular when the inclination of the support device 3 reaches, with respect to the platform 2, an angle exceeding a threshold value, preferably between 20° and 30°.

Said second motor 9 preferably acts directly on the support device 3 simulating the hydrodynamic force of the water on the keel which attempts to straighten the boat.

Finally, the second motor 9 is also preferably positioned integral with the platform 2 and is also of hydraulic type.

The support device 3 also comprises an accelerometer **19,** suitable to measure the force exerted by the boat 30 on this device 3 in the direction of the longitudinal axis 3a. The accelerometer 19 or transducer is preferably positioned on the supports 17a and/or 17b or on the blocking point of the reduced keel.

The simulation apparatus 1 also preferably comprises an electronic processor to control this device 1 and connected to the rudder 31, to the accelerometer 19, to the motors 6 and 9 and the like.

Finally, the simulation apparatus 1 comprises a connection with the mains power supply or with a generator in order to supply the first and second motor 6 and 9, the electronic processor and any other members. Moreover, an electrical connection **10** of partially movable type, suitable to transmit electrical current from a fixed to a revolving portion, is also provided.

The electrical connection 10 is preferably of the brush or brushless type and is positioned substantially along the vertical axis 2a between the fixed structure 7 and the platform 2.

Operation of the simulation apparatus, the structure of which is described above, is as follows.

The simulation device 1 is positioned in a preferred place, in particular in a windy place or in proximity of large fans or the like.

A sailing boat 30, in particular of the type with movable keels, Laser keels or the like, is placed on the support device and made integral therewith.

The sailing boat 30 can be specifically modified, for example the keel can be shortened.

The simulation apparatus 1 is then ready to be used.

A user positions himself on the boat 30 and uses it exactly like a boat in water.

By means of the sails **33** the user exerts, through the force of the wind, a force in longitudinal direction 3a, detected by the accelerometer 19 and communicated to specific electrical or mechanical control means.

The user can also perform turns using the sails 33 or use the rudder 31.

In the first case the boat 30 exerts a force in a direction perpendicular to the longitudinal direction 3a. The boat 30 rotates about the vertical axis 2a and the longitudinal axis 3a (Fig. 3b) in opposition to the opposing means 5.

The opposing means 5 therefore simulate the straightening thrust of the water, initially only through the elastic elements 8 and subsequently also through the second motor 9.

The opposing means 5 can also be adjusted on the basis of the speed detected, through the electronic processor and accelerometer 19 which preferably control the second motor 9.

When the boat 30 rotates about the vertical axis 2a, the platform 2 and the support device 3 rotate with it.

The resistance to rotation of the boat 30 can also be varied by the first motor 6 through the hydraulic circuit by means of regulation valves at the discharge and/or by an electronic device in the case in which the motor is of the electric type to simulate the real behaviour of the boat 30 in water.

The invention achieves important advantages.

In fact, the simulation apparatus 1 allows simulation of the point of sailing on a real sailing boat, which has inclinations, behaviour and reactions identical to a boat 30 used in water.

Moreover, the boat 30 on the apparatus 1 reacts to the wind, either natural or artificially generated, like a boat 30 in water.

The user therefore gets accustomed to the real point of sailing of a boat and can practice in any environmental situation and even far from the sea.

Moreover, the opposing means 5, the first motor 6, the accelerometer 19, the rudder 31 and the hydraulic, mechanical or electronic control means complete the simulation of the behaviour of the sailing boat 30.

The invention is susceptible to modifications and variants falling within the inventive concept. All the details can be replaced by equivalent elements and the materials, the shapes and dimensions can be any.

## Claims

1. Simulation apparatus (1) for sailing boat (30) comprising: a fixed structure (7) suitable to support said simulation apparatus (1) on the ground, a support device (3) suitable to support said sailing boat (30) connected to said fixed structure (7), **characterized in that** it comprises at least one guide (4), positioned between said fixed structure (7) and said support device (3), **in that** said support device (3) is suitable to oscillate angularly about a longitudinal axis (3a), along said guide (4), and **in that** it comprises opposing means (5) suitable to oppose movements of said support device (3) along said guide (4).

2. Simulation apparatus (1) according to claim 1, wherein said longitudinal axis (3a) is positioned on a substantially horizontal plane.

3. Simulation apparatus (1) according to claim 1 or 2, wherein said opposing means (5) comprises elastic elements (8).

4. Simulation apparatus (1) according to one or more of the preceding claims, wherein said opposing means (5) comprises a second motor (9).

5. Simulation apparatus (1) according to claims 2 and 4, wherein said second motor (9) is suitable to act on said support device (3) for angles of inclination of said sailing boat (30) greater than a threshold value.

6. Simulation apparatus (1) according to one or more of the preceding claims, comprising a platform (2), revolving about a substantially vertical axis (2a), supported by said fixed structure (7) and supporting said support device (3).

7. Simulation apparatus (1) according to claim 6, comprising a first motor (6) suitable to rotate said platform (2) with respect to said fixed structure (7), about said vertical axis (2a).

8. Simulation apparatus (1) according to claim 7, wherein said first motor (9) is a hydraulic motor.

9. Simulation apparatus (1) according to one or more of the preceding claims, comprising an electrical connection (10) suitable to transmit electrical current from a fixed portion to a revolving portion, positioned substantially along said vertical axis (2a) and suitable to electrically connect said fixed structure (7) and said platform (2).

10. Simulation apparatus (1) according to one or more of the preceding claims, wherein said support device (3) comprises an accelerometer (19) suitable to detect the force exerted by said sailing boat (30) in the direction of said longitudinal axis (3a) of said boat (30).
